# EUROPEAN PATENT SPECIFICATION

(11) **EP 1 235 745 B1**
(45) Date of publication and mention of the grant of the patent: **17.08.2005**
(21) Application number: 00986061.0
(22) Date of filing: 14.11.2000
(51) Int. Cl.: C01B 31/22, B30B 11/20, B01J 2/22

(54) **METHOD FOR PRODUCING CRYOGENIC PARTICLES FROM FLUID CARBON DIOXIDE**
VERFAHREN ZUR HERSTELLUNG VON KRYOGENISCHEN TEILCHEN AUS FLÜSSIGEM KOHLENDIOXID
PROCEDE DE PRODUCTION DE PARTICULES CRYOGENIQUES A PARTIR DE DIOXYDE DE CARBONE FLUIDE

(30) Priority: 29.11.1999 NL 1013692
(43) Date of publication of application: 04.09.2002
(73) Proprietor: Konings, Huibert, 1447 RT Purmerend (NL)
(72) Inventor: Konings, Huibert, 1447 RT Purmerend (NL)
(86) International application number: PCT/NL2000/000831
(87) International publication number: WO 2001/038221

(56) References cited:
- WO-A-92/09525
- FR-A- 2 078 442
- NL-A- 9 401 327

## Description

The invention concerns of a method to produce cryogenic particles from cooled liquid carbon dioxide. The particles are pressed from crystalised carbon dioxide in an equipment where a carbon dioxide snow generator is combined with a annular mould and a heat exchanger.
it is found that the form of crystallisation of solid carbon dioxide varies greatly by the conditions while come into being. It is found that deviation of conditions results in soft particles and superfluous snow.

The invention concerns the conditions which are required to produce very hard cryogenic particles. The method consists of cooling the fluid carbon dioxide before expansion to a temperature between minus 30 to minus 40 degrees Celcius by preference minus 35 degrees Celcius.
The French publication FR-2.078.442 describes an installation where cooled liquid carbon dioxide is expanded in an expansion chamber and a annular mould but has no feature to keep the temperature of the expansion head at a level preventing freezing of present water. The type of mould produces round pellets which are less efficient.

When 4 to 8 and by preference 6 expansion openings are used with a diameter of 0,3 to 1,0 millimetre, by preference 0,6 millimetre, for carbon dioxide snow production hard carbon dioxide crystals come into being when compressed with a annular mould with a diameter between 250 millimetre and 350 millimetre and by preference 300 millimetre according to NL-A-9401327 delivers particles with an side of about 3 millimetre and break off spontaneous at a length of about 4 millimetre. Small differences of these conditions cause a decrease of hardness and shorter or much longer particles.

### Description of the process.

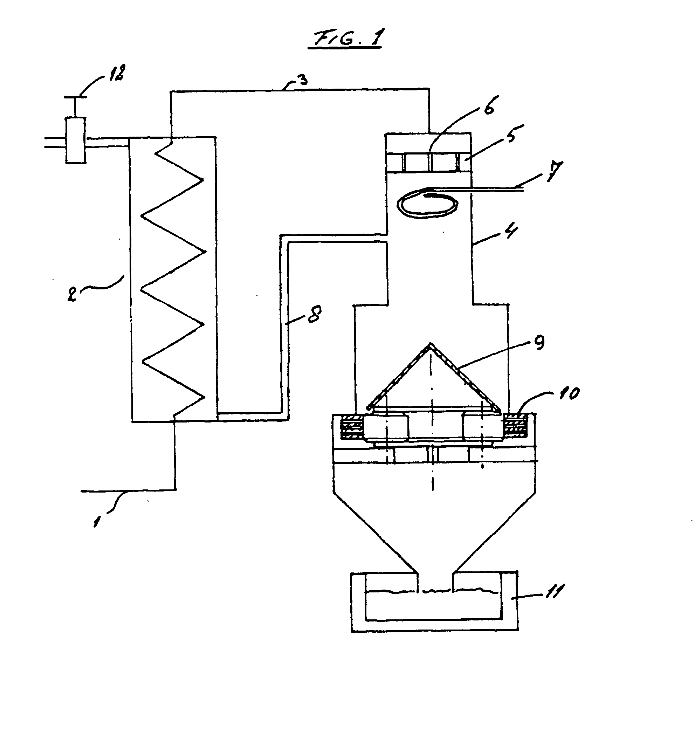

Fig. 1 shows the installation.

Input (1) of liquid carbon dioxide is led through heat exchanger (2) and cooled to a temperature between minus 30 to minus 40 degrees Celcius and via conduit (3) led to carbon dioxide snow generator (4). At (5) is the spraying head with 4 to 8 expansion openings (6). Expansion openings (6) have a diameter between 0,3 and 1,0 millimetre. Under spray head (5) is placed a heat coil (7) to prevent that the temperature in the carbon dioxide snow generator (4) is getting too low and freezing of the expansion openings (6) in the case that the liquid carbon dioxide contains too much water. A constant temperature inside the carbon dioxide snow generator (4) is also important for the right crystallisation.

In carbon dioxide snow generator (4) comes into being a mixture of carbon dioxide gas and carbon dioxide crystals. This mixture is separated by leading carbon dioxide gas via conduit (8) to heat exchanger (2) where this is used to cool the input of liquid carbon dioxide. The temperature of the exhaust carbon dioxide gas is about minus 80 degrees Celcius and via heat exchanger (2) expelled to the open air. At (12) is a choke valve to keep a low atmospheric pressure in carbon dioxide snow generator (4).
The carbon dioxide crystals fall via a with the rollers rotating cone (9) into extrusion ring (10). Inside extrusion ring (10) the carbon dioxide crystals are compressed by rollers into bars of solid carbon dioxide with a triangle cross section. It is found that an extrusion ring with a diameter between 250 and 350 millimetre and a width between 40 and 70 millimetre (of the type as described in NL-A-9401327) in this equipment produces 250 to 350 kilogram cryogenic particles per hour which is nearly free of snow.

The cryogenic particles are received in isolating crates (11) and used for cleaning operations by spraying.

## Claims

1. Method for producing cryogenic particles from liquid carbon dioxide using a annular mould which has a diameter between 250 and 350 millimetre and a width between 40 and 70 millimetre **characterised by** that liquid carbon dioxide is cooled to a temperature between minus 30 to minus 40 degrees Celcius and then expanded in carbon dioxide snow generator (4) into a mixture of carbon dioxide gas and crystalised carbon dioxide, where carbon dioxide crystals in the annular mould (10) are pressed into triangular particles with a side of 3 to 6 millimetre.

2. Method for producing cryogenic particles from liquid carbon dioxide as in claim 1 **characterised by** that the carbon dioxide snow generator (4) is foreseen with 4 to 8 expansion openings (6) with a diameter of 0,3 to 1,0 millimetre, where inside the space of the carbon dioxide snow generator (4) near the expansion openings (6) a heating spiral (7) is mounted.

3. Method for producing cryogenic particles from liquid carbon dioxide as in claim 1 and 2 **characterised by** that gaseous carbon dioxide from the carbon dioxide snow generator (4) is led to a heat exchanger (2) where the liquid carbon dioxide supply is cooled to a temperature of minus 30 to minus 40 degrees Celcius, where heat exchanger (2) is foreseen with choke valve (12).

4. Method for producing cryogenic particles from liquid carbon dioxide as in claim 1, 2 and 3 **characterised by** that to produce the cryogenic particles an extrusion ring (10) is used where the number of revolutions per minute of the rollers is kept between 180 and 360 where the carbon dioxde snow is directed via cone (9) to the horizontal mounted extrusion ring (10).

5. Method for producing cryogenic particles from liquid carbon dioxide as in claim 1, 2, 3 and 4 **characterised by** that the cryogenic particles consists of solid hard crystalline carbon dioxide in the form of triangular bars with a side of about 3 millimetre and a length of 3 to 6 millimetre.

## Patentansprüche

1. Verfahren zur Herstellung von kryogenischen Teilchen aus flüssigen Kohlendioxid unter gebrauch von ein ringförmige Matrize mit ein Durchmesser zwischen 250 und 350 Millimeter und ein Breite zwischen 40 und 70 Millimeter **gekennzeichnet durch** daß flüssiges Kohlendioxid wird abgekühlt bis ein Temperatur zwischen minus 30 bis minus 40 Grad Celsius und darauf expandiert in Kohlendioxid Schnee Generator (4) in ein Gemisch von Kohlendioxid Gas und kristallisiertes Kohlendioxid, wobei Kohlendioxid Kristallen innerhalb der ringförmige Matrize (10) werden gepresst in dreieckige Teilchen mit ein Kante von 3 bis 6 Millimeter.

2. Verfahren zur Herstellung von kryogenischen Teilchen aus flüssigen Kohlendioxid nach Patentanspruch 1 **dadurch gekennzeichnet daß** der Kohlendioxid Schnee Generator (4) ist vorgesehen mit 4 bis 8 Expansionsöffnungen (6) mit ein Durchmesser von 0,3 bis 1,0 Millimeter, wobei innerhalb der Raum der Kohlendioxid Schnee Generator (4) in der Nähe der Expansionsöffnungen (6) ein Heizungsspiral ist montiert.

3. Verfahren zur Herstellung von kryogenischen Teilchen aus flüssigen Kohlendioxid nach Patentanspruch 1 und 2 **dadurch gekennzeichnet daß** Kohlendioxid im Gasform von der Kohlendioxid Schnee Generator (4) ist geleitet nach ein Wärmeaustauscher (2) wo der Zufuhr flüssigen Kohlendioxid wird abgekült bis ein Temperatur von minus 30 bis minus 40 Grad Celsius, wobei Wärmeaustauscher (2) ist vorhergesehen mit ein Drosselventil (12).

4. Verfahren zur Herstellung von kryogenischen Teilchen aus flüssigen Kohlendioxid nach Patentanspruch 1, 2 und 3 **dadurch gekennzeichnet daß** zum Herstellen der kryogenischen Teilchen ein Ring (10) zum Strangpressen ist angewendet wobei der Drehgeschwindigkeit pro Minute der Rollen ist gehalten zwischen 180 und 360 wobei Kohlendioxid Schnee wirt geleited via Konus (9) nach der horizontal montierten ringförmige Matrize (10).

5. Verfahren zur Herstellung von kryogenischen Teilchen aus flüssigen Kohlendioxid nach Patentanspruch 1, 2, 3 und 4 **dadurch gekennzeichnet daß** die kryogenischen Teilchen bestehen aus massiv kristallinisch Kohlendioxid in der Form von dreieckige Staben mit ein Kante von ungefär 3 Millimeter und ein Länge von 3 bis 6 Millimeter.

## Revendications

1. Procédé de production des particles cryogéniques à partir de dioxyde de carbone fluide en utilisant une matrice annulaire avec une diamètre entre 250 et 350 millimètre et une épaisseur entre 40 et 70 millimètre **caracterisé par** que le dioxide de carbone fluide est refroidi vers une température entre minus 30 vers minus 40 degré Celsius et ensuite expandé dans le générateur de neige de dioxide de carbon (4) dans une mixture de gaz de dioxide de carbon et dioxide de carbon cristallisé, dans lequel des cristals de dioxide de carbon dans la matrice annulaire sont pressé vers particles triangulaire avec une marge de 3 vers 6 millimètre.

2. Procédé de production des particles cryogéniques à partir de dioxyde de carbone fluide selon revendication 1 **caractérisé par** que le générateur de neige de dioxide de carbon (4) est prévu avec 4 vers 8 des orifices d'expansion (6) avec une diamètre de 0,3 vers 1,0 millimètre, dans lequel dans l'espace du générateur de neige de dioxide de carbon (4) à proximité des orifices d'expansion (6) est monté une spiral de chauffage (7).

3. Procédé de production des particles cryogéniques à partir de dioxyde de carbone fluide selon revendications 1 et 2 **caractérisé par** que le dioxide de carbon gazeuse du générateur de neige de dioxide de carbon (4) est conduit vers une changeur de chaleur (2) dans lequel l'alimentation de dioxide de carbone fluide est refroidi vers une température de minus 30 vers minus 40 degrèes Celsius dans lequel le changeur de chaleur (2) est prévu de soupape d'admission (12).

4. Procédé de production des particles cryogéniques à partir de dioxyde de carbone fluide selon revendications 1, 2 et 3 **caractérisé par** l'usage d'une matrice annulair (10) pour produire les particles cryogénic dans lequel le nombre des révolutions par minute des rouleaux est retenu entre 180 et 360 dans lequel la neige de dioxide de carbon est conduite via cône (9) vers la matrice annulaire (10) monté horizontale.

5. Procédé de production des particles cryogéniques à partir de dioxyde de carbone fluide selon revendications 1, 2, 3 et 4 **caractérisé par** les particles cryogéniques se composé de dioxide de carbon cristalline solide dans la forme des barres avec une marge environ de 3 millimètre et une longeur de 3 vers 6 millimètre.
